# EUROPEAN PATENT APPLICATION

(11) **EP 1 585 214 A1**
(43) Date of publication of application: **12.10.2005**
(21) Application number: 03781004.1
(22) Date of filing: 22.12.2003
(51) Int. Cl.: H02P 5/41

(54) **MOTOR DRIVE DEVICE FOR AIR CONDITIONER**

(30) Priority: 28.12.2002 JP 2002383734
(71) Applicant: DAIKIN INDUSTRIES, LTD., Osaka 530-8323 (JP)
(72) Inventor: MECHI, Abdallah, c/o Daikin Air-Conditioning, Kusatsu-shi, Shiga 525-0044 (JP)
(74) Representative: Goddar, Heinz J.
(86) International application number: PCT/JP2003/016486
(87) International publication number: WO 2004/062078

(57) **Abstract**

A motor drive device is in conformity with an IEC standard and achieves a high power factor. The device has a converter (200) using an AC power source (100) as the input source, a three phase inverter (400) for outputting an AC voltage using an output voltage from the converter (200) and supplying the AC voltage to a motor (500) for an air conditioner, and control means (800) for controlling the converter (200) so as to maximize efficiency.

## Description

### Technical Field

The present invention relates to a device for driving a motor for an air conditioner with high input power factor and with high efficiency.

### Related Art

Today, various consumption things are connected to a network for delivering electricity. On one hand, those consumption things have different requirements for electrical power quality. On the other hand, those consumption things have a variety of affection to a grid. Those affection have impact on electrical power quality.

When a variety of affection are added to highly environmental consciousness of a user on a grid, requirements on energy saving device are increased. Therefore, employing inverter technology and a motor with high efficiency is increasing not only in domestic electric apparatus products such as an air conditioner, but also in various fields.

Attractive points of the inverter technology are ability for changing an output frequency and an output voltage for optimizing flux for increasing whole of drive efficiency, and ability for driving a motor at a desired speed for energy efficiency.

As is acknowledged, the inverter technology is divided broadly into two technologies, one corresponding to low cost and low performance technology and the other corresponding to high cost and high performance technology.

The low cost and low performance technology comprises a diode bridge, an electrolytic capacitor, and an inverter. An input of the diode bridge is connected to a grid, an output of the diode bridge is connected to the electrolytic capacitor. The electrolytic capacitor is used for power supply to the inverter which is used for controlling load energy complying with user's requirement, in itself.

This technology is used widely for the following two reasons. The first reason is low cost due to the reduction in number of switches which are used. The second reason is succeeding in legal application of the harmonics restriction law.

The high cost and high performance technology comprises power factor correction circuit connected between a grid and an inverter.

This technology is not yet used widely for the following two reasons.

The first reason is high cost due to a large number of switches which are used. The second reason is low efficiency due to losses in power devices which are used for generating PWM (pulse width modulation).

A method for generating an input current waveform which is acceptable by the EMC (electromagnetic compatibility) regulation, is used.

### Disclosure of the Invention

From the past, a power electronic device in a network distributing intermediate and low voltages, is used for improving efficiency by controlling consumption electrical power quality on user side, and by removing affection on grid side.

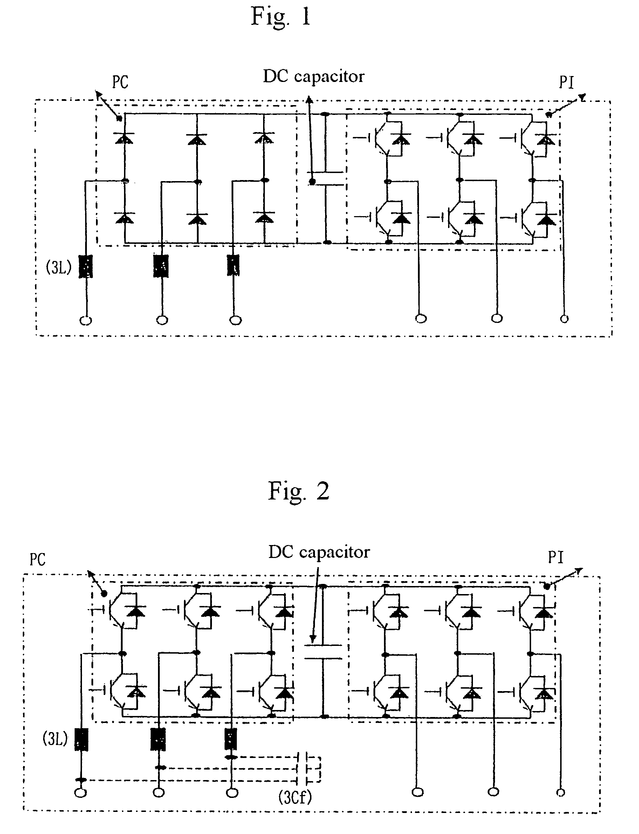

A power electronic device which is the most known device, is of a back-to-back inverter type illustrated in Fig. 2. This technology is no match for the conventional inverter technology (refer to Fig. 1) comprising a simple diode bridge and one DC reactor or three AC reactors, in cost and efficiency. And, a DC voltage can be controlled from only the high value of input voltage.

Therefore, a current source converter on grid side is taken into consideration as a solution for realize PWM strategy known as PAM (pulse amplitude modulation). But, the current source topology is known that it is low in efficiency performance and is high cost. A condition is changing and efficiency is increasing due to rapid improvement in power device technology. But, it is no match for the conventional inverter technology in cost due to a limited number in mass-production technology.

The present invention was made in view of the above problems.

It is an object of the present invention to provide a motor drive device for air conditioner with high power factor adapted for IEC standards.

It is another object to provide a motor drive device for air conditioner applicable to input power source of a wide range.

A motor drive device for air conditioner of first aspect according to the present invention comprises a converter, a three phase inverter, and control means.

The converter receives an AC power. The three phase inverter receives the output voltage from the converter and outputs an AC voltage which is supplied to a motor for air conditioner. The control means controls the converter so as to maximize efficiency.

A motor drive device for air conditioner of second aspect according to the present invention employs a three phase converter as the converter.

A motor drive device for air conditioner of third aspect according to the present invention employs a single phase converter as the converter.

A motor drive device for air conditioner of fourth aspect according to the present invention further comprises a reactor connected in series to the converter in its input side and a capacitor connected in parallel to the converter in its input side.

A motor drive device for air conditioner of fifth aspect according to the present invention employs a converter in which pairs of switching devices each connected in series are connected in parallel to each other, a number of pairs corresponding to a phase number, and a diode is connected in parallel to each switching device, as the converter.

A motor drive device for air conditioner of sixth aspect according to the present invention employs a converter in which serial circuits are connected in parallel to each other, each serial circuit comprising one switching device and a pair of diodes connected in forward connection and interposing the switching device, a number of serial circuits corresponding to a phase number, and a diode is connected in parallel to each switching device in reverse connection, as the converter.

The motor drive device for air conditioner of first aspect according to the present invention comprises a converter receiving an AC power, a three phase inverter receiving the output voltage from the converter and outputting an AC voltage which is supplied to a motor for air conditioner, and control means controlling the converter so as to maximize efficiency. Therefore, the IEC regulation is satisfied for entire extent, efficiency is improved, and reduction in cost is realized.

The motor drive device for air conditioner of second aspect according to the present invention employs a three phase converter as the converter. Therefore, the motor drive device can cope with a three phase AC power source, and realize operations and effects similar to those of the first aspect.

The motor drive device for air conditioner of third aspect according to the present invention employs a single phase converter as the converter. Therefore, the motor drive device can cope with a single phase AC power source, and realize operations and effects similar to those of the first aspect.

The motor drive device for air conditioner of fourth aspect according to the present invention further comprises a reactor connected in series to the converter in its input side and a capacitor connected in parallel to the converter in its input side. Therefore, the motor drive device can remove current ripple due to the switching of the switching devices of the converter, and realize operations and effects similar to those of one of the first aspect through the third aspect.

The motor drive device for air conditioner of fifth aspect according to the present invention employs a converter in which pairs of switching devices each connected in series are connected in parallel to each other, a number of pairs corresponding to a phase number, and a diode is connected in parallel to each switching device, as the converter. Therefore, the motor drive device can realize operations and effects similar to those of one of the first aspect through the fourth aspect.

The motor drive device for air conditioner of sixth aspect according to the present invention employs a converter in which serial circuits are connected in parallel to each other, each serial circuit comprising one switching device and a pair of diodes connected in forward connection and interposing the switching device, a number of serial circuits corresponding to a phase number, and a diode is connected in parallel to each switching device in reverse connection, as the converter. Therefore, the motor drive device can reduce switching losses, and realize operations and effects similar to those of one of the first aspect through the fourth aspect.

### Brief Description of the Drawings

Figure 1 is an electronic circuit diagram illustrating a conventional motor drive device which uses a diode bridge and an inverter;
Figure 2 is an electronic circuit diagram illustrating a conventional motor drive device which uses back-to-back inverter technology;
Figure 3 is a diagram illustrating a relationship between a DC voltage and a load;
Figure 4 is a diagram illustrating simulation results in efficiency of a motor drive device for air conditioner;
Figure 5 is a schematic diagram illustrating a motor drive device for air conditioner of an embodiment according to the present invention;
Figure 6 is a schematic diagram illustrating a motor drive device for air conditioner of another embodiment according to the present invention;
Figure 7 is a schematic diagram illustrating a motor drive device for air conditioner of a further embodiment according to the present invention;
Figure 8 is a schematic diagram illustrating a motor drive device for air conditioner of a further embodiment according to the present invention; and
Figure 9 is a schematic diagram illustrating a motor drive device for air conditioner of a further embodiment according to the present invention.

### Best Mode for Carrying Out the Invention

Hereinafter, referring to the attached drawings, we explain a motor drive device for air conditioner of an embodiment according to the present invention, in detail.

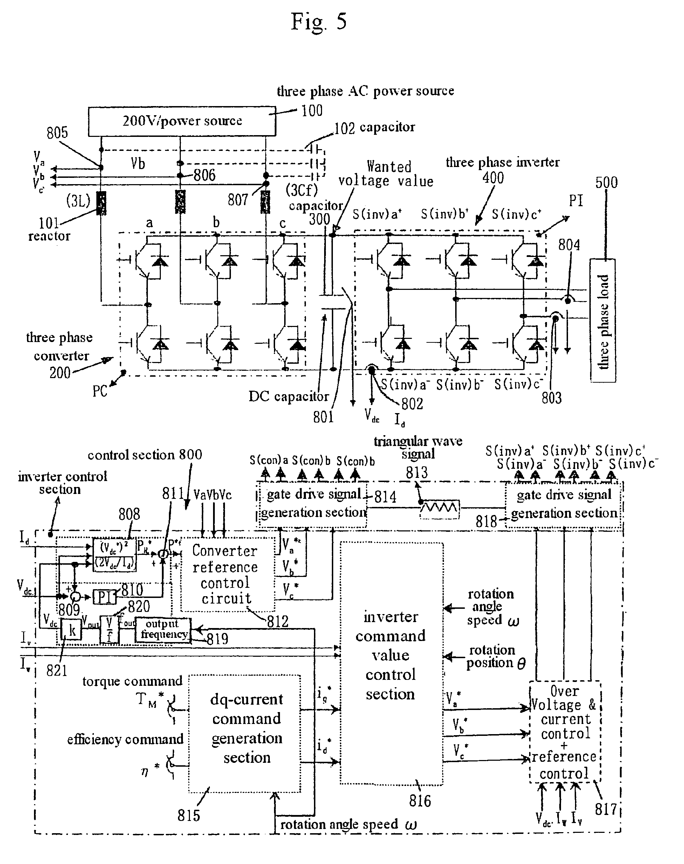

Fig. 5 is a schematic diagram illustrating a motor drive device for air conditioner of an embodiment according to the present invention.

The a motor drive device for air conditioner comprises a three phase converter 200, a DC capacitor 300, and a three phase inverter 400.

The three phase converter 200 is connected to a three phase AC power source 100 through reactors 101. The DC capacitor 300 is connected between output terminals of the three phase converter 200. The three phase inverter 400 receives a voltage between terminals of the DC capacitor 300, as the working voltage. The output of the three phase inverter 400 is supplied to a three phase load (for example, a motor for air conditioner) 500. Capacitors 102 are provided, each capacitor 102 being connected between input side terminals of the reactor 101. However, those capacitors 102 can be omitted. Further, a control section 800 is provided for controlling switching devices of the three phase converter 200 and the three phase inverter 400.

The switching devices of the three phase converter 200 and the three phase inverter 400 are similar to the integration IGBT standard module, for example, and are designed to suit the input/output conditions of the three phase AC power source 100 and the three phase load 500.

The control section 800 comprises a first voltage detection section 801, a first current detection section 802, second current detection sections 803 and 804, second voltage detection sections 805, 806, and 807, a power command calculation section 808, a difference calculation section 809, a PI operation section 810, an addition section 811, a converter command value control section 812, a triangular wave generation section 813, a gate drive signal generation section 814, a dq-current command generation section 815, an inverter command value control section 816, a control section 817 for inverter, a gate drive signal generation section 818, an output frequency calculation section 819, an output voltage calculation section 820, and a reference voltage value between terminals calculation section 821.

The first voltage detection section 801 detects a voltage between terminals of the DC capacitor 300.

The first current detection section 802 detects an input current Id of the three phase inverter 400.

The second current detection sections 803 and 804 detect output currents Iv and Iw for two phases from the three phase inverter 400.

The second voltage detection sections 805, 806, and 807 detect each phase voltage Va, Vb, and Vc of the three phase AC power source.

The power command calculation section 808 receives the voltage between terminals Vdc of the DC capacitor 300, the reference voltage value between terminals Vdc*, and the input current Id of the three phase inverter 400, and carries out the operation of (Vdc*)2/(2Vdc/Id) so as to calculate a command value PR* for the power on three phase inverter side.

The difference calculation section 809 calculates a difference between the reference voltage value between terminals Vdc* and the voltage between terminals Vdc.

The PI operation section 810 receives the calculated difference, and carries out the proportional-integral operation so as to output a command value for power on three phase converter side.

The addition section 811 adds both power command values so as to output a total power command value P*.

The converter command value control section 812 receives the total power command value P* and each phase voltage Va, Vb, and Vc of the three phase AC power source 105, and carries out converter command value control operation so as to output each phase voltage command value Va*, Vb*, and Vc*.

The triangular wave generation section 813 outputs a triangular wave signal.

The gate drive signal generation section 814 receives the phase voltage command value Va*, Vb*, and Vc* and the triangular wave signal, and outputs gate drive signals S(con) which is supplied to the switching devices of each phase of the three phase converter 200.

The dq-current command generation section 815 receives a torque command value TM*, efficiency command η *, and a rotation angle speed ω of a rotor of the motor 500 for air conditioner, and outputs a reference current of d axis id* and a reference current of q axis iq*.

The inverter command value control section 816 receives the output currents Iv and Iw from the three phase inverter 400, the reference current of d axis id*, the reference current of q axis iq*, the magnetic pole position θ of the rotor of the motor 500 for air conditioner, and the rotation angle speed ω of a rotor of the motor 500 for air conditioner, and carries out inverter command value control operation so as to output each phase voltage command value Va:, Vb*, and Vc*.

The control section 817 for inverter receives each phase voltage command value Va:, Vb*, and Vc*, the voltage between terminals Vdc of one of the pair of capacitors, and the output currents Iv and Iw from the three phase inverter 400, and carries out over-voltage control, over-current control, and command value control so as to output each phase voltage command value.

The gate drive signal generation section 818 receives the each phase voltage command value and the triangular wave signal, and outputs gate drive signals S(inv) which are supplied to the switching devices 601 for each phase of the three phase inverter.

The output frequency calculation section 819 receives the rotation angle speed ω of a rotor of the motor 500 for air conditioner, and outputs an output frequency fout.

The output voltage calculation section 820 receives the output frequency fout, and carries out the operation of V/f so as to output an output voltage Vout.

The voltage command value between terminals calculation section 821 multiplies a predetermined coefficient k to the output voltage Vout so as to calculate a reference voltage value between terminals Vdc*.

When the motor drive device for air conditioner having the above arrangement is employed, a three phase AC power source 100 with a constant voltage and a constant frequency can be converted into a three phase AC output power with a variable voltage and a variable frequency.

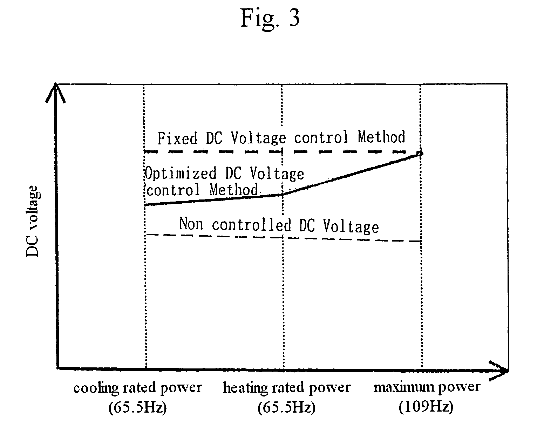

As is shown in Fig. 3, the DC voltage between the three phase converter 200 and the three phase inverter 400 is controlled so as to maximize the whole of converter/inverter efficiency at three main operation points (point of cooling rated power, point of heating rated power, and maximum load point) of the three phase inverter 400 for feeding to the motor 500 for air conditioner. The control method can be realized by employing a PWM converter on grid side and a high voltage motor on load side. The control method includes controlling the DC voltage at the DC link to be a value required for the inverter on load side, for supplying an AC voltage required for optimum capacity of the motor.

Therefore, the three phase converter 200 is for power factor correction and sample control strategy based upon instantaneous information of a DC current, a DC voltage and an input voltage. Therefore, bi-directional power control is possible.

The three phase converter 200 operates to absorb sine wave current of each phase together with a line voltage, and controls the DC link voltage to be a value corresponding to the maximum efficiency at each operation point.

Although changing in the DC voltage cannot be avoided, the command value is determined to be a maximum permissible value not to affect the output efficiency, the maximum permissible value being able to be accepted by the maximum voltage of a power device. Therefore, the rated current of a power device on load side can be reduced, and the efficiency can be improved.

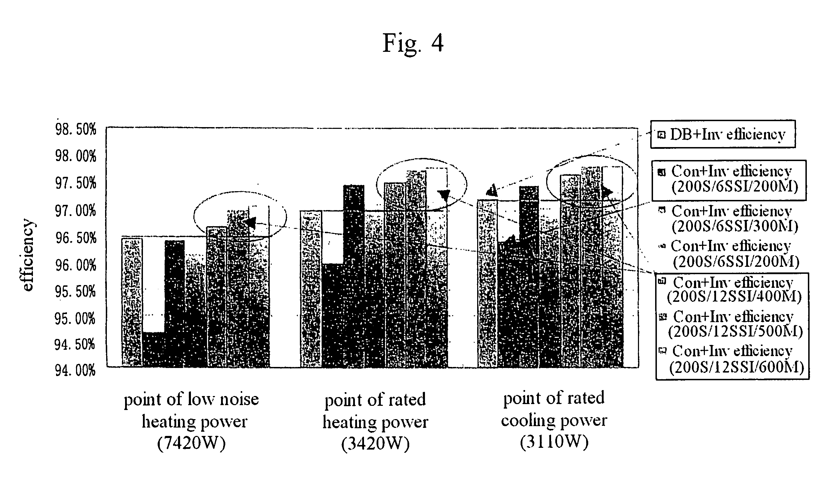

Fig. 4 is a diagram illustrating simulation results in whole of efficiency at a point of low noise heating power, a point of rated heating power, and a point of rated cooling power. The simulation results represent sequentially from the left for cases of the combination of the diode bridge and the inverter, the combination of the converter and the inverter {grid side voltage is 200V, the rated voltage of the IGBT is 600V, the rated voltage of the motor is 200V (hereinafter, this combination is simply represented with 200S/6SSI/200M)}, the combination of the converter and the inverter (200S/6SSI/300M), the combination of the converter and the inverter (200S/12SSI/300M), the combination of the converter and the inverter (200S/12SSI/400M), the combination of the converter and the inverter (200S/12SSI/500M), and the combination of the converter and the inverter (200S/12SSI/600M).

As is understood from Fig. 4, it is understood that efficiency higher than that of the case in which the combination of the diode bridge and the inverter is employed, can be realized by employing one of the combination of the converter and the inverter (200S/12SSI/400M), the combination of the converter and the inverter (200S/12SSI/500M), and the combination of the converter and the inverter (200S/12SSI/600M) and by employing the above control arrangement.

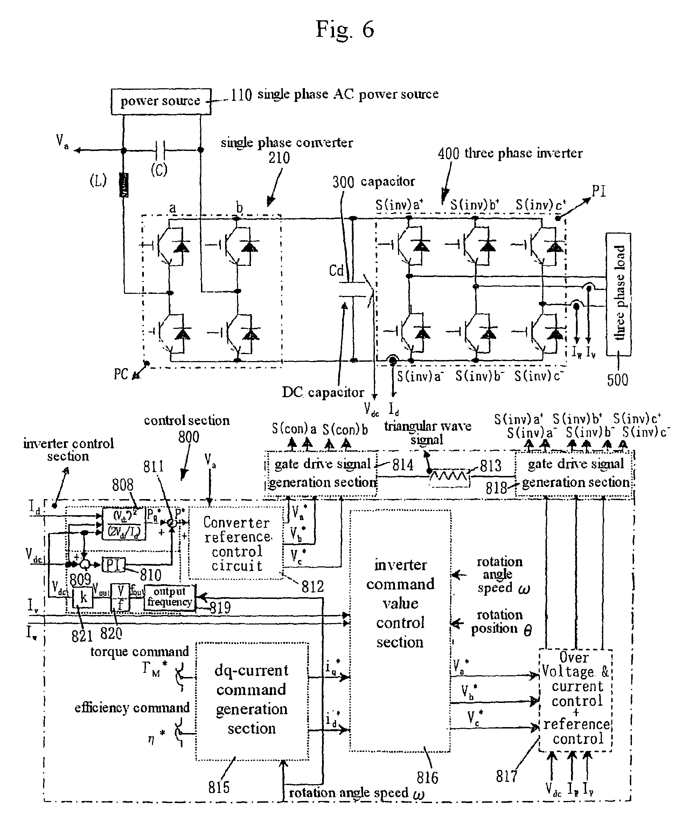

Fig. 6 is a schematic diagram illustrating a motor drive device for air conditioner of another embodiment according to the present invention.

The motor drive device for air conditioner is different from the motor drive device for air conditioner in Fig. 5 in that a single phase converter 210 is employed instead the three phase converter 200, so as to cope with a single phase AC power source 110 instead the three phase AC power source 100, and that the arrangement of the control section 800 is simplified in correspondence with changing into single phase arrangement.

Therefore, the motor drive device for air conditioner can cope with the single phase AC power source 110. The motor drive device for air conditioner realizes operations and effects similar to those of the motor drive device for air conditioner in Fig. 5.

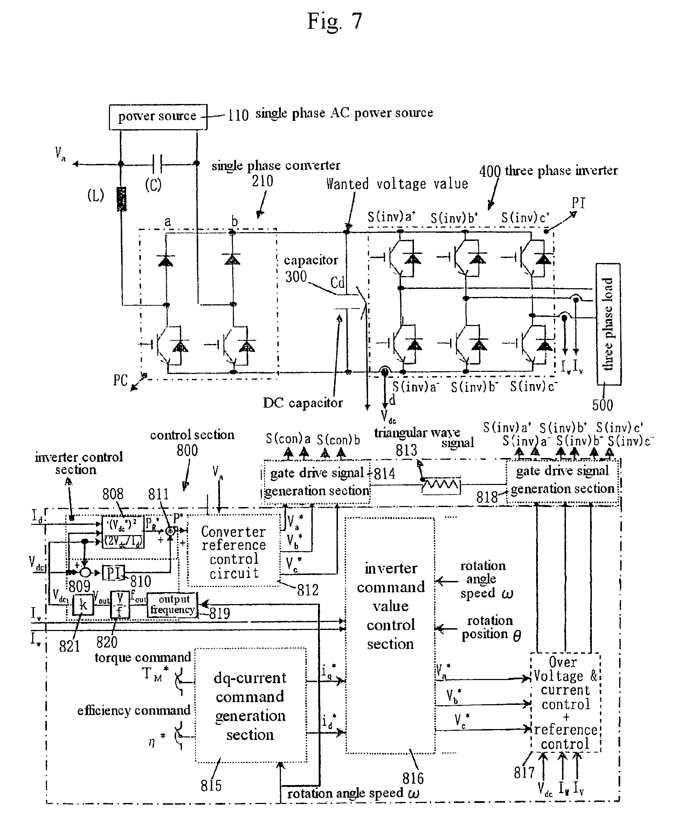

Fig. 7 is a schematic diagram illustrating a motor drive device for air conditioner of a further embodiment according to the present invention.

The motor drive device for air conditioner is different from the motor drive device for air conditioner in Fig. 6 in that one of each of the pairs of switching devices serially connected to each other in the single phase converter 210 is replaced with a diode.

In this case, the arrangement of the single phase converter 210 can be simplified, and the losses can be reduced due to the reduction in number of switching devices. The motor drive device for air conditioner realizes operations and effects similar to those of the motor drive device for air conditioner in Fig. 6.

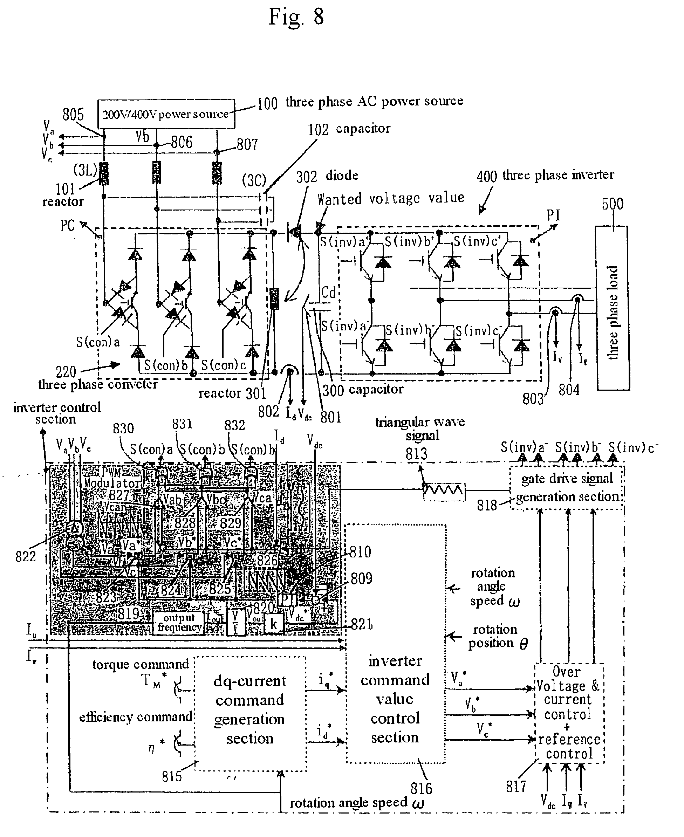

Fig. 8 is a schematic diagram illustrating a motor drive device for air conditioner of a further embodiment according to the present invention.

The motor drive device for air conditioner is different from the motor drive device for air conditioner in Fig. 5 in that a three phase converter (three phase current source converter) 220 having a different arrangement is employed instead the three phase converter 200, and that a reactor 301 is connected between output terminals of the three phase converter 220 and a diode 302 is connected in reverse polarity between one output terminal of the three phase converter 220 and corresponding input terminal of the three phase inverter 400, and that a partial arrangement of the control section 800 is modified in correspondence with the three phase converter 220.

In the three phase converter 220, for every phase, a switching device is connected between a pair of diodes, and a serial circuit of a pair of input diodes is connected in parallel to the switching device in reverse polarity, and each of connection points of the input diodes is connected to the three phase AC power source 100 through a reactor 101.

The reactor 301 and the diode 302 are possible to be replaced to each other.

In the correspondence part of the control section 800, a Δ-Y conversion section 822, three phase AC voltage command calculation sections 823, 824 and 825, a calibration signal output section 826, comparison sections 827, 828, and 829, and gate drive signal generation sections 830, 831, and 832 are provided instead the power command calculation section 808, the addition section 811, the converter command value control section 812, and the gate drive signal generation section 814.

The Δ-Y conversion section 822 Δ-Y converts the three phase voltages of the three phase AC power source.

The three phase AC voltage command calculation sections 823, 824 and 825 receive the Δ -Y converted three phase AC voltages and the DC voltage command, and outputs respective AC voltage command for three phase.

The calibration signal output section 826 receives the triangular wave signal and the DC current, and outputs a calibration signal.

The comparison sections 827, 828, and 829 receive the respective AC voltage command for three phase and the calibration signal, and output signals representative of the relationship in size.

The gate drive signal generation sections 830, 831, and 832 receive two comparison signals, and carry out NOR operation and the like so as to output gate drive signals.

Therefore, the motor drive device for air conditioner reduces the number of switching devices of the three phase converter 220, and improves the efficiency. The motor drive device for air conditioner realizes operations and effects similar to those of the motor drive device for air conditioner in Fig. 5.

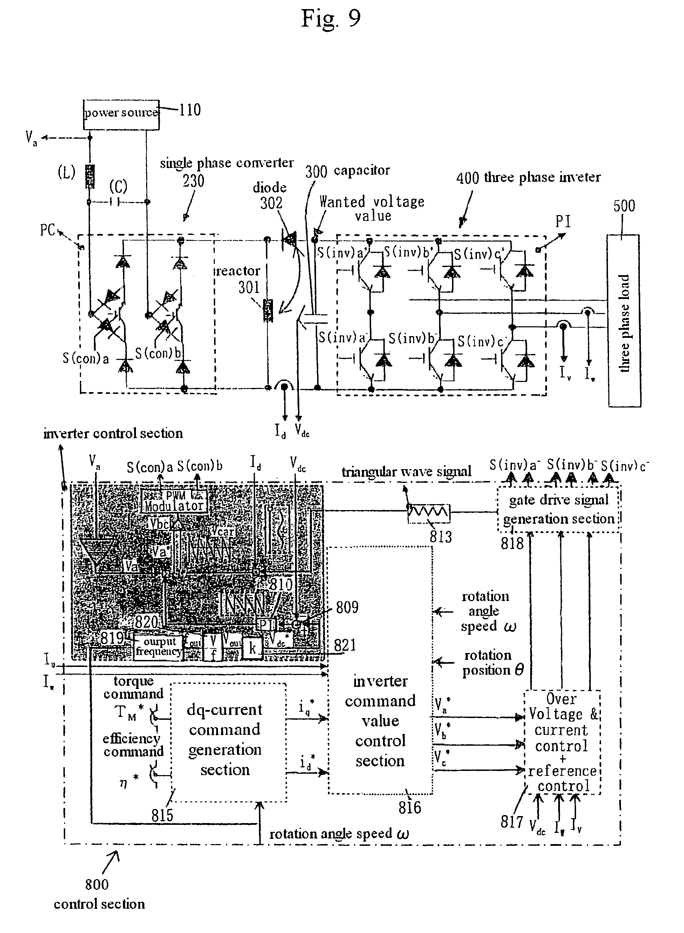

Fig. 9 is a schematic diagram illustrating a motor drive device for air conditioner of a further embodiment according to the present invention.

The motor drive device for air conditioner is different from the motor drive device for air conditioner in Fig. 8 in that a single phase converter 230 is employed instead the three phase converter 200, so as to cope with a single phase AC power source 110 instead the three phase AC power source 100, and that the arrangement of the control section 800 is simplified in correspondence with changing into single phase arrangement.

Therefore, the motor drive device for air conditioner can cope with the single phase AC power source 110. The motor drive device for air conditioner realizes operations and effects similar to those of the motor drive device for air conditioner in Fig. 8.

When the above motor drive device for air conditioner is employed, the IEC regulation is satisfied for entire extent. And, higher efficiency than conventional device is realized for every operation point. The motor drive device for air conditioner greatly reduces the AC reactor in size by increasing the switching frequency, reduces the load side rated electric power of the switching device, and realizes reduction in cost by reducing the capacitor in the DC link in size by employing instantaneous control of the power flow between the power source side and the load side.

## Claims

1. A motor drive device for air conditioner comprising:
a converter (200)(210)(220)(230) which receives an AC power (100)(110);
a three phase inverter (400) which receives the output voltage from the converter (200)(210)(220)(230) and outputs an AC voltage which is supplied to a motor (500) for air conditioner; and
control means (800) which controls the converter (200)(210)(220)(230) so as to maximize efficiency.

2. A motor drive device for air conditioner as set forth in claim 1, wherein the converter (200)(220) is a three phase converter (200)(220).

3. A motor drive device for air conditioner as set forth in claim 1, wherein the converter (210)(230) is a single phase converter (210)(230).

4. A motor drive device for air conditioner as set forth in one of claim 1 through claim 3, further comprising a reactor (101) connected in series to the converter (200)(210)(220)(230) in its input side and a capacitor (102) connected in parallel to the converter (200)(210)(220)(230) in its input side.

5. A motor drive device for air conditioner as set forth in one of claim 1 through claim 4, wherein the converter (200)(210)(220)(230) comprises pairs of switching devices each connected in series, the pairs of switching devices being connected in parallel to each other, a number of pairs corresponding to a phase number, and a diode which is connected in parallel to each switching device.

6. A motor drive device for air conditioner as set forth in one of claim 1 through claim 4, wherein the converter (200)(210)(220)(230) comprises serial circuits which are connected in parallel to each other, each serial circuit comprising one switching device and a pair of diodes connected in forward connection and interposing the switching device, a number of serial circuits corresponding to a phase number, and a diode which is connected in parallel to each switching device in reverse connection.
